(19) **Europäisches Patentamt**

**European Patent Office**

**Office européen des brevets**

(11) **EP 1 119 592 B1**

(12) **EUROPÄISCHE PATENTSCHRIFT**

(45) Veröffentlichungstag und Bekanntmachung des Hinweises auf die Patenterteilung:
**17.11.2004 Patentblatt 2004/47**

(21) Anmeldenummer: **99942853.5**

(22) Anmeldetag: **11.08.1999**

(51) Int Cl.$^7$: **C09D 133/14**, C09D 5/03, C09D 5/02
// C09D133:14, C09D161:32

(86) Internationale Anmeldenummer:
**PCT/EP1999/005891**

(87) Internationale Veröffentlichungsnummer:
**WO 2000/015725 (23.03.2000 Gazette 2000/12)**

(54) **PULVERKLARLACK UND WÄSSRIGE PULVERKLARLACK-SLURRY**

POWDER CLEAR VARNISH AND AQUEOUS POWDER CLEAR VARNISH SLURRY

VERNIS EN POUDRE ET SUSPENSION EPAISSE AQUEUSE DE VERNIS EN POUDRE

(84) Benannte Vertragsstaaten:
**DE ES FR IT**

(30) Priorität: **10.09.1998 DE 19841408**

(43) Veröffentlichungstag der Anmeldung:
**01.08.2001 Patentblatt 2001/31**

(73) Patentinhaber: **BASF Coatings AG
48165 Münster (DE)**

(72) Erfinder:
 • **OTT, Günther
  D-48167 Münster (DE)**
 • **WOLTERING, Joachim
  D-48159 Münster (DE)**
 • **RÖCKRATH, Ulrike
  D-48308 Senden (DE)**
 • **WONNEMANN, Heinrich
  D-48291 Telgte (DE)**
 • **SCHWARTE, Stephan
  D-48282 Emsdetten (DE)**

(74) Vertreter: **Fitzner, Uwe, Dr. et al
Dres. Fitzner & Münch
Rechts- und Patentanwälte
Lintorfer Strasse 10
40878 Ratingen (DE)**

(56) Entgegenhaltungen:
**WO-A-99/15593    WO-A-99/15598**

**Beschreibung**

Die vorliegende Erfindung betrifft einen neuen Pulverklarlack und einer neue wäßrige Pulverklarlack-Dispersion, welche sich insbesondere als Überzug für Automobilkarosserien eignet, welche mit Wasserbasislacken beschichtet sind.

Für die Beschichtung von Automobilkarosserien werden heute vorzugsweise Flüssiglacke, d. h. Spritzlacke, verwendet. Diese verursachen zahlreiche Umweltprobleme aufgrund ihres Lösemittelgehaltes. Dies gilt auch für die Fälle der Verwendung von Wasserlacken, weil diese noch immer gewisse Mengen an organischen Lösemitteln enthalten.

Aus diesem Grunde sind in den letzten Jahren vermehrte Anstrengungen unternommen worden, für die Beschichtung Pulverlacke zu verwenden. Die Ergebnisse sind jedoch bisher nicht zufriedenstellend, insbesondere zeigen Pulverklarlacke noch Schwächen hinsichtlich der Chemikalienbeständigkeit und der Vergilbung. Epoxy/Carboxyvemetzte Pulverklarlacke zeigen eine deutlich schlechtere Anätzbeständigkeit gegenüber Wasser, Baumharz und Schwefelsäure.

Viele Entwicklungen haben inzwischen das Ziel, Pulverklarlacke in Form wäßriger Dispersion zu entwickeln, welche sich mit Flüssiglacktechnologien verarbeiten lassen. Aus der Patentschrift US-A-4,268,542 ist beispielsweise ein Verfahren bekannt, bei dem eine Pulverlack-Dispersion auf Basis von Acrylatharzen verwendet wird, welche sich für die Beschichtung von Automobilen eignet. Hierbei wird zunächst eine herkömmliche Pulverschicht auf die Karosserie aufgetragen, wonach man die Pulverlack-Dispersion als Klarlack appliziert. Bei dieser Pulverklarlack-Dispersion, welche von der Fachwelt auch als Pulverslurry oder Pulverklarlack-Slurry bezeichnet wird, werden ionische Verdicker verwendet, welche zu einer relativ hohen Empfindlichkeit der applizierten Klarlackschicht gegen Feuchtigkeit, insbesondere gegen Schwitzwasser, führen. Zudem muß mit hohen Einbrenntemperaturen von über 160 °C gearbeitet werden.

Aus der DE-A-196 13 547 ist eine wäßrige Pulverklarlack-Slurry bekannt, welche die genannten Anforderungen erfüllt. Sie zeigt jedoch nach ihrer Applikation und Vernetzung ebenso wie die bisher bekannten festen Pulverklarlacke eine geringe Anätzbeständigkeit gegenüber Wasser, Baumharz und Schwefelsäure. Außerdem neigt der hiermit hergestellte Klarlack zur Vergilbung.

Ein weiterer Nachteil von Klarlacken, welche aus den herkömmlichen Pulverklarlack-Slurries hergestellt worden sind, ist ihre Neigung zur Delamination, wenn bestimmte Wasserbasislacke verwendet werden. Diese Delamination kann sich bereits bei einem Wechsel in der Farbe der Wasserbasislacke bemerkbar machen.

Aufgabe der vorliegenden Erfindung ist es, einen neuen Pulverklarlack und eine neue Pulverklarlack-Sluny zur Verfügung zu stellen, welche die Nachteile des Standes der Technik nicht mehr länger aufweisen, sondern welche eine deutlich bessere Anätzbeständigkeit und eine reduzierte Neigung zur Vergilbung nach der Vernetzung zeigen. Außerdem soll der Klarlack, welcher mit Hilfe der neuen Pulverklarlack-Slurry hergestellt worden ist, auf allen gängigen Wasserbasislacken fest haften und nicht zur Delamination neigen.

Demgemäß wurden der neue Pulverklarlack und die neue Pulverklarlack-Slurry gefunden, welche

a) mindestens ein epoxidhaltiges Bindemittel mit einem Gehalt von, bezogen auf das Bindemittel, 0,5 bis 40 Gew.-% an einpolymerisierten glycidylgruppenhaltigen Monomeren und

b) mindestens ein Tris(alkoxycarbonylamino)triazin und mindestens eine Polycarbonsäure, insbesondere eine geradkettige Dicarbonsäure, und/oder einen carboxyfunktionellen Polyester als Vemetzungsmittel

oder alternativ

a) mindestens ein Tris(alkoxycarbonylamino)triazin und mindestens ein oligomeres oder polymeres epoxidhaltiges Vernetzungsmittel mit einem Gehalt von, bezogen auf das Vernetzungsmittel, 0,5 bis 40 Gew.-% an einpolymerisierten glycidylgruppenhaltigen Monomeren und/oder ein niedermolekulares epoxidhaltiges Vernetzungsmittel und

b) mindestens ein Carboxylgruppen enthaltendes Polymer als Bindemittel
enthalten, wobei beide Varianten

c) mindestens ein Polyol enthalten.

Im folgenden wird der neue Pulverklarlack und die neue Pulverklarlack-Slurry als erfindungsgemäßer Pulverklarlack und als erfindungsgemäße Slurry bezeichnet.

Im Hinblick auf den Stand der Technik war es überraschend und für den Fachmann nicht vorhersehbar, daß der erfindungsgemäße Pulverklarlack und die erfindungsgemäße Slurry die Nachteile des Standes der Technik nicht mehr länger aufweisen würden. Insbesondere war es überraschend, daß die Klarlacke, welche mit Hilfe der erfindungsgemäßen Slurry hergestellt werden, auf allen Arten von Wasserbasislacken fest haften und auch bei Änderungen der Rezepturen nicht mehr delaminieren.

Die Zusammensetzung des erfindungsgemäßen Pulverklarlacks und der erfindungsgemäßen Pulverslurry kann breit variieren und dem jeweiligen Verwendungszweck optimal angepaßt werden. Erfindungsgemäß ist es von Vorteil, wenn der erfindungsgemäße Pulverklarlack und die erfindungsgemäße Slurry, bezogen auf den jeweiligen Festkörper, die erfindungswesentlichen Bestandteile a), b) und c) in den folgenden Mengen:

a) 55 bis 80, besonders bevorzugt 60 bis 78 und insbesondere 62 bis 75 Gew.-%,

b) 14 bis 30, besonders bevorzugt 17 bis 25 und insbesondere 18 bis 23 Gew.-% sowie

c) 2 bis 22, besonders bevorzugt 4 bis 20 und insbesondere 6 bis 18 Gew.-%

enthalten.

Als epoxyfunktionelles Bindemittel a) für den erfindungsgemäßen Pulverklarlack oder die erfindungsgemäße Slurry sind beispielsweise epoxidgruppenhaltige Polyacrylatharze geeignet, welche durch Copolymerisation von mindestens einem ethylenisch ungesättigten Monomer, das mindestens eine Epoxidgruppe in Molekül enthält, mit mindestens einem weiteren ethylenisch ungesättigten Monomer, das keine Epoxidgruppe im Molekül enthält, herstellbar sind, wobei mindestens eines der Monomere ein Ester der Acrylsäure oder Methacrylsäure ist. Derartige epoxidgruppenhaltige Polyacrylatharze sind beispielsweise aus den Patentschriften EP-A-0 299 420, DE-B-22 14 650, DE-B-27 49 576, US-A-4,091,048 oder US-A-3,781,379 bekannt.

Beispiele geeigneter erfindungsgemäß zu verwendender Monomere, welche keine Epoxidgruppe im Molekül enthalten, sind Alkylester der Acryl- und Methacrylsäure, insbesondere Methylacrylat, Methylmethacrylat, Ethylacrylat, Ethylmethacrylat, n-Butylacrylat, n-Butylmethacrylat, sekundär-Butylacrylat, sekundär-Butylmethacrylat, tert.-Butylacrylat, tert.-Butylmethacrylat, Neopentylacrylat, Neopentylmethacrylat, 2-Ethylhexylacrylat oder 2-Ethylhexylmethacrylat; Amide der Acrylsäure und Methacrylsäure, insbesondere Acrylamid und Methacrylsäureamid; vinylaromatische Verbindungen, insbesondere Styrol, Methylstyrol oder Vinyltoluol; die Nitrile der Acrylsäure und Methacrylsäure; Vinyl- und Vinylidenhalogenide, insbesondere Vinylchlorid oder Vinylidenfluorid; Vinylester, insbesondere Vinylacetat und Vinylpropionat; Vinylether, insbesondere n-Burylvinylether, oder hydroxylgruppenhaltige Monomere, insbesondere Hydroxyethylacrylat, Hydroxyethylmethacrylat, Hydroxypropylacrylat, Hydroxypropylmethacrylat, 4-Hydroxybutylacrylat oder 4-Hydroxybutylmethacrylat.

Beispiele geeigneter erfindungsgemäß zu verwendender epoxyfunktioneller Monomerer sind Glycidylacrylat, Glycidylmethacrylat oder Allylglycidylether.

Das epoxidgruppenhaltige Polyacrylatharz weist üblicherweise ein Epoxidäquivalentgewicht von 400 bis 2500, vorzugsweise 420 bis 700, ein zahlenmittleres Molekulargewicht Mn (gelpermeationschromatographisch unter Verwendung eines Polystyrolstandards bestimmt) von 2000 bis 20000, vorzugsweise 3000 bis 10000, und eine Glasübereangstemperatur Tg von 30 bis 80, vorzugsweise 40 bis 70, besonders bevorzugt 40 bis 60 und insbesondere 48 bis 52 °C (gemessen mit Hilfe der Differential Scanning Calorimetry (DSC)) auf.

Die Herstellung des epoxidgruppenhaltigen Polyacrylatharzes weist keine Besonderheiten auf, sondern erfolgt nach den üblichen und bekannten Polymerisationsmethoden.

Der weitere wesentliche Bestandteil des erfindungsgemäßen Pulverlacks und der erfindungsgemäßen Slurry ist das Vernetzungsmittel a) oder b).

Erfindungsgemäß werden mindestens zwei unterschiedliche Vernetzungsmittel a) oder b) angewandt.

Hierbei handelt es sich bei dem ersten Vernetzungsmittel b) um Tris(alkoxycarbonylamino)triazine und deren Derivate. Beispiele geeigneter Tris(alkoxycarbonylamino)triazine werden in den Patentschriften US-A-4,939,213, US-A-5,084,541 oder der EP-A-0 624 577 beschrieben. Insbesondere werden die Tris(methoxi-, Tris(butoxi- und/oder Tris(2-ethylhexoxicarbonylamino)triazine verwendet.

Erfindungsgemäß bevorzugt sind die Methyl-Butyl-Mischester, die Butyl-2-Ethylhexyl-Mischester und die Butylester. Diese haben gegenüber dem reinen Methylester den Vorzug der besseren Löslichkeit in Polymerschmelzen.

Die Tris(alkoxycarbonylamino)triazine und deren Derivate können auch im Gemisch mit herkömmlichen Vernetzungsmitteln verwendet werden. Hierfür kommen vor allem Polyisocyanate in Betracht, welche von den Tris(alkoxycarbonylamino)triazinen verschieden sind. Ebenso sind Aminoplastharze, beispielsweise Melaminharze, verwendbar. Hierbei kann jedes für transparente Decklacke oder Klarlacke geeignete Aminoplastharz oder eine Mischung aus solchen Aminoplastharzen verwendet werden.

Derartige Harze sind dem Fachmann gut bekannt und werden von zahlreichen Firmen als Verkaufsprodukte angeboten.

Bei dem zweiten Vernetzungsmittel b) handelt es sich um Carbonsäuren, insbesondere gesättigte, geradkettige, aliphatische Dicarbonsäuren mit 3 bis 20 Kohlenstoffatomen im Molekül. An ihrer Stelle oder zusätzlich zu ihnen können auch carboxyfunktionelle Polyester verwendet werden. Ganz besonders bevorzugt wird Dodecan-1,12-dicarbonsäure verwendet.

Um die Eigenschaften der erfindungsgemäßen Pulverlacke und Slurries zu modifizieren, können noch andere Carboxylgruppen enthaltende Vernetzungsmittel in untergeordneten Mengen verwendet werden. Beispiele geeigneter zusätzlicher Vernetzungsmittel dieser Art sind gesättigte verzweigte oder ungesättigte geradkettige Di- und Polycarbonsäuren sowie die nachstehend als Bindemittel b) im Detail beschriebenen Polymere mit Carboxylgruppen.

Erfindungsgemäß können die erfindungsgemäßen Pulverklarlacke und Slurries in einer zweiten Variante ein epoxyfunktionelles Vernetzungsmittel a) und ein Carboxylgruppen enthaltendes Bindemittel b) enthalten.

Beispiele geeigneter erfindungsgemäß zu verwendender Carboxylgruppen enthaltender Bindemittel b) sind beispielsweise Polyacrylatharze, welche durch Copolymerisation von mindestens einem ethylenisch ungesättigten Monomer, das mindestens eine Säuregruppe im Molekül enthält, mit mindestens einem weiteren ethylenisch ungesättigten Monomer, das keine Säuregruppen im Molekül enthält, hergestellt werden.

Beispiele gut geeigneter erfindungsgemäß zu verwendender, Carboxylgruppen enthaltender Bindemittel b) sind die nachstehend unter der Ziffer 1. sowie den Ziffern 1.1 bis 1.4 beschriebenen Polyacrylate und Polymethacrylate mit einem Gehalt an einpolymerisierter Acrylsäure und/oder Methacrylsäure > 0 Gew.-%.

Beispiele geeigneter erfindungsgemäß zu verwendender oligomerer und polymerer epoxyfunktioneller Vemetzungsmittel a) sind die vorstehend beschriebenen epoxidgruppenhaltigen Bindemittel a).

Beispiele geeigneter erfindungsgemäß zu verwendender niedermolekularer epoxyfunktioneller Vernetzungsmittel a) sind niedermolekulare, mindestens zwei Glycidylgruppen enthaltende Verbindungen, insbesondere Pentaerythrittetraglycidylether oder Triglycidylisocyanurat.

Das epoxidgruppenhaltige Bindemittel a) und das Carboxylgruppen enthaltende Vernetzungsmittel b) der ersten erfindungsgemäßen Variante bzw. das Carboxylgruppen enthaltende Bindemittel b) und das epoxyfunktionelle Vernetzungsmittel a) der zweiten erfindungsgemäßen Variante werden im allgemeinen in einem solchen Verhältnis eingesetzt, daß pro Äquivalent Epoxidgruppen 0,5 bis 1,5, vorzugsweise 0,75 bis 1,25 Äquivalente Carboxylgruppen vorliegen. Die Menge der vorliegenden Carboxylgruppen kann in einfacher Weise durch Titration mit einer alkoholischen KOH-Lösung ermittelt werden.

Erfindungsgemäß enthält das epoxyfunktionelle Bindemittel a) oder das oligomere oder polymere epoxyfunktionelle Vemetzungsmittel a) vinylaromatische Verbindungen wie Styrol einpolymerisiert. Um die Gefahr der Rißbildung bei der Bewitterung zu begrenzen, liegt der Gehalt indes nicht über 35 Gew.-%, bezogen auf das Bindemittel a) oder das Vernetzungsmittel a). Bevorzugt werden 10 bis 25 Gew.-% einpolymerisiert.

Der weitere wesentliche Bestandteil des erfindungsgemäßen Pulverklarlacks und der erfindungsgemäßen Slurry ist mindestens ein Polyol c).

Als erfindungsgemäß zu verwendende Polyole c) kommen alle niedermolekularen Verbindungen, Oligomere und Polymere in Betracht, welche mindestens zwei, vorzugsweise mindestens drei primäre und/oder sekundäre Hydroxylgruppen aufweisen und den festen Zustand des erfindungsgemäßen Pulverlacks und der erfindungsgemäßen Slurry nicht zerstören.

Beispiele geeigneter erfindungsgemäß zu verwendender Oligomere und Polymere c) sind lineare und/oder verzweigte und/oder blockartig, kammartig und/oder statistisch aufgebaute Poly(meth)acrylate, Polyester, Polyurethane, acrylierte Polyurethane, acrylierte Polyester, Polylactone, Polycarbonate, Polyether, (Meth)Acrylatdiole, Polyharnstoffe oder oligomere Polyole.

Werden diese Oligomere und Polymere als Polyole c) verwendet, enthalten sie vorzugsweise keine Carboxylgruppen.

Diese Oligomere und Polymere sind dem Fachmann bekannt, und zahlreiche geeignete Verbindungen sind am Markt erhältlich.

Von diesen Oligomeren und Polymeren c) sind die Polyacrylate, die Polyester und/oder die acrylierten Polyurethane von Vorteil und werden deshalb bevorzugt verwendet.

Beispiele für besonders bevorzugte erfindungsgemäß zu verwendende Oligomere und Polymere c) sind

1. Polyacrylate mit einer Hydroxylzahl von 40 bis 240, vorzugsweise 60 bis 210, insbesondere 100 bis 200, einer Säurezahl von 0 bis 35, Glasübergangstemperaturen von -35 bis + 85 °C und zahlenmittlere Molekulargewichte $M_n$ von 1500 bis 300.000.
Die Glasübergangstemperatur der Polyacrylate wird bekanntermaßen durch Art und Menge der eingesetzten Monomere bestimmt. Die Auswahl der Monomeren kann vom Fachmann unter Zuhilfenahme der folgenden Formel V getroffen werden, nach welcher die Glasübergangstemperaturen näherungsweise berechnet werden können.

$$1/Tg = \sum_{n=1}^{n=x} W_n / Tg_n \quad ; \quad \sum_n W_n = 1 \qquad (V)$$

Tg = Glasübergangstemperatur des Polyacrylatharzes
$W_n$ = Gewichtsanteil des n-ten Monomers
$Tg_n$ = Glasübergangstemperatur des Homopolymers aus dem n-ten Monomer
x = Anzahl der verschiedenen Monomeren

Maßnahmen zur Steuerung des Molekulargewichts (z. B. Auswahl entsprechender Polymerisationinitiatoren, Verwendung von Kettenübernragungsmitteln oder spezieller Verfahren der Polymerisation usw.) gehören zum Fachwissen und müssen hier nicht näher erläutert werden.

1.1 Besonders bevorzugte Polyacrylate sind herstellbar indem (a1) 10 bis 92, vorzugsweise 20 bis 60 Gew.-%, eines Alkyl- oder Cycloalkylmethacrylats mit 1 bis 18, vorzugsweise 4 bis 13 Kohlenstoffatomen im Alkyl- oder Cycloalkylrest oder Mischungen aus solchen Monomeren, (a2) 8 bis 60, vorzugsweise 12,5 bis 50,0 Gew.-%, eines Hydroxyalkylacrylats oder eines Hydroxyalkylmethacrylats mit 2 bis 4 Kohlenstoffatomen im Hydroxyalkylrest oder Mischungen aus solchen Monomeren, (a3) 0 bis 5, vorzugsweise 0,7 bis 3 Gew.-% Acrylsäure oder Methacrylsäure oder Mischungen aus diesen Monomeren und (a4) 0 bis 50, vorzugsweise bis zu 30 Gew.-%, von von (a1), (a2) und (a3) verschiedenen, mit (a1), (a2) und (a3) copolymerisierbaren ethylenisch ungesättigten Monomeren oder Mischungen aus solchen Monomeren zu Polyacrylaten der vorstehend angegebenen Spezifikation polymerisiert werden.
Beispiele geeigneter (a1)-Komponenten sind Methyl-, Ethyl-, Propyl-, n-Butyl-; Isobutyl-, tert.-Butyl-, Pentyl-, Hexyl-, Heptyl- oder 2-Ethylhexylacrylat oder -methacrylat sowie Cyclohexyl-, tert.-Butylcyclohexyl- oder Isobornylacrylat oder -methacrylat.
Beispiele geeigneter (a2)-Komponenten sind Hydroxyethyl-, Hydroxypropyl- oder Hydroxybutyl- oder Hydroxymethylcyclohexylacrylat oder -methacrylat oder Addukte von (Meth)Acrylsäure und Epoxiden wie Versaticsäure[R]-glycidylester.
Beispiele geeigneter (a4)-Komponenten sind Vinylaromaten wie Styrol, Vinyltoluol, alpha- Methylstyrol, alpha-Ethylstyrol, kernsubstituierte Diethylstyrole, Isopropylstyrol, Butylstyrol und Methoxystyrole; Vinylether wie Ethylvinylether, n-Propylvinylether, Isopropylvinylether, n-Butylvinylether oder Isobutylvinylether, Vinylester wie Vinylacetat, Vinylpropionat, Vinylbutyrat, Vinylpivalat oder der Vinylester der 2-Methyl-2-ethylheptansäure; oder Allylether wie Trimethylolpropanmono-, -di- oder -triallylether oder ethoxilierter oder propoxilierter Allylalkohol.

1.2 Weitere Beispiele besonders bevorzugter Polyacrylate werden in der europäischen Patentanmeldung EP-A-0 767 185 und den amerikanischen Patentschriften US-A- 5 480 493, 5 475 073 oder 5 534 598 beschrieben.

1.3 Weitere Beispiele besonders bevorzugter Polyacrylate werden unter der Marke Joncryl[R] vertrieben, wie etwa Joncryl[R] SCX 912 und 922,5.

1.4 Weitere Beispiele für besonders bevorzugte Polyacrylate sind solche, welche erhältlich sind, indem (a1) 10 bis 51 Gew.-%, vorzugsweise 25 bis 41 Gew.-%, 4-Hydroxy-n-butylacrylat oder -methacrylat oder eine Mischung hiervon, insbesondere aber 4-Hydroxy-n-butylacrylat, (a2) 0 bis 36 Gew.-%, vorzugsweise 0,1 bis 20 Gew.-%, eines von (a1) verschiedenen hydroxylgruppenhaltigen Esters der Acrylsäure oder der Methacrylsäure oder eines Gemisches hiervon, (a3) 28 bis 85 Gew.-%, vorzugsweise 40 bis 70 Gew.-%, eines von (a1) und (a2) verschiedenen, aliphatischen oder cycloaliphatischen Esters der Methacrylsäure mit mindestens vier Kohlenstoffatomen im Alkoholrest oder eines Gemisches solcher Monomeren, (a4) 0 bis 3 Gew.-%, vorzugsweise 0,1 bis 2 Gew.-%, einer ethylenisch ungesättigten Carbonsäure oder einer Mischung aus solchen Säuren und (a5) 0 bis 20 Gew.-%, vorzugsweise 5 bis 15 Gew.-%, eines von (a1), (a3) und (a4) verschiedenen ungesättigten Monomeren oder einer Mischung aus solchen Monomeren zu einem Polyacrylat mit einer Hydroxylzahl von 60 bis 200, vorzugsweise von 100 bis 160, einer Säurezahl von 0 bis 35 und einem zahlenmittleren Molekulargewicht $M_n$ von 1500 bis 10000 polymerisiert werden, wobei die Zusammensetzung der Komponente (a3) so gewählt wird, daß bei alleiniger Polymerisation dieser Komponente (a3) ein Polymethacrylat einer Glasübergangstemperatur von + 10 bis + 100 °C, vorzugsweise von + 20 bis + 60 °C, erhalten wird.

Beispiele geeigneter Komponenten (a2) sind Hydroxialkylester der Acrylsäure und Methacrylsäure wie Hydroxyethyl- oder Hydroxypropylacrylat oder -methacrylat, wobei die Wahl so zu treffen ist, daß bei alleiniger Polymerisation dieser Komponente (a2) ein Polyacrylat einer Glasübergangstemperatur von 0 bis + 80 °C, vorzugsweise von + 20 bis + 60 °C erhalten wird.

Beispiele geeigneter Komponenten (a3) sind aliphatische Ester der Methacrylsäure mit vier bis 20 Kohlenstoffatomen in Alkoholrest wie n-Butyl -, Isobutyl -, tert. - Butyl -, 2-Ethylhexyl-, Stearyl- und Laurylmethacrylat; oder cycloaliphatische Ester der Methacrylsäure wegen Cyclohexylmethacrylat.

Beispiele geeigneter Komponenten (a4) sind Acrylsäure und/oder Methacrylsäure.

Beispiele geeigneter Komponenten (a5) sind vinylaromatische Kohlenwasserstoffe wie Styrol, alpha-Alkylstyrol oder Vinyltoluol; Amide der Acrylsäure und Methacrylsäure wie Methacrylamid und Acrylamid; Nitrile der Acrylsäure und Methacrylsäure; Vinylether oder Vinylester, wobei die Zusammensetzung dieser Komponente (a5) vorzugsweise so zutreffend ist, daß bei alleiniger Polymerisation der Komponenten (a5) ein Polyacrylat mit einer Glasübergangstemperatur von + 70 bis + 120 °C, insbesondere von + 80 bis + 100 °C resultiert.

1.5 Die Herstellung dieser Polyacrylate ist allgemein bekannt und wird beispielsweise in dem Standardwerk Houben-Weyl, Methoden der organischen Chemie, 4. Auflage, Band 14/1, Seiten 24 bis 255, 1961, beschrieben.

2. Polyesterharze, welche herstellbar sind, indem (a1) mindestens eine cycloaliphatische oder aliphatische Polycarbonsäure, (a2) mindestens ein aliphatisches oder cycloaliphatisches Polyol mit mehr als zwei Hydroxylgruppen im Molekül, (a3) mindestens ein aliphatisches oder cycloaliphatisches Diol und (a4) mindestens eine aliphatische, lineare oder verzweigte gesättigte Monocarbonsäure in einem molaren Verhältnis von (a1): (a2) : (a3) : (a4) = 1,0 : 0,2 bis 1,3 : 0,0 bis 1,1 : 0,0 bis 1,4, vorzugsweise 1,0 : 0,5 bis 1,2 : 0,0 bis 0,6 : 0, 2 bis 0,9 zu einem Polyester oder Alkydharz umgesetzt werden.

Beispiele geeigneter Komponenten (a1) sind Hexahydrophthalsäure, 1,4-Cyclohexandicarbonsäure, Endomethylentetrahydrophthalsäure, Oxalsäure, Malonsäure, Bernsteinsäure, Glutarsäure, Adipinsäure, Pimelinsäure, Korksäure, Azelainsäure oder Sebacinsäure.

Beispiele geeigneter Komponenten (a2) sind Pentaerythrit, Trimethylolpropan, Triethylolethan und Glycerin.

Beispiele geeigneter Komponenten (a3) sind Ethylenglykol, Diethylenglykol, Propylenglykol, Neopentylglykol, 2-Methyl-2-propylpropandiol-1,3, 2-Methyl-2-butylpropandiol-1,3, 2,2,4-Trimethylpentandiol-1,5, 2,2,5-Trimethylhexandiol-1,6, Hydroxypivalinsäureneopentylglykolester oder Dimethylolcyclohexan.

Beispiele geeigneter Komponenten (a4) sind 2-Ethylenhexansäure, Laurinsäure, Isooctansäure, Isononansäure oder Monocarbonsäuremischungen, welche aus Kokosfett oder Palmkernfett gewonnen werden.

Die Herstellung der erfindungsgemäß bevorzugt verwendeten Polyester und Alkydharze ist allgemein bekannt und wird beispielsweise in dem Standardwerk Ullmanns Encyklopädie der technischen Chemie, 3. Auflage, Band 14, Urban & Schwarzenberg, München, Berlin, 1963, Seiten 80 bis 89 und Seiten 99 bis 105, sowie in den Büchern: "Résines Alkydes-Polyesters" von J. Bourry, Paris, Verlag Dunod, 1952, "Alkyd Resins" von C. R. Martens, Reinhold Publishing Corporation, New York, 1961, sowie "Alkyd Resin Technology" von T. C. Patton, Intersience Publishers, 1962, bschrieben.

3. Polyurethane, wie sie in den Patentschriften EP-A-0 708 788, DE-A-44 01 544 oder DE-A-195 34 361 beschrieben werden.

Weitere Beispiele für erfindungsgemäß geeignete Oligomere c) sind oligomere Polyole, welche aus oligomeren Zwischenprodukten, die durch Metathesereaktionen von acyclischen Monoolefinen und cyclischen Monoolefinen gewonnen werden, durch Hydroformylierung und anschließender Hydrierung erhältlich sind; Beispiele geeigneter cyclischer Monoolefine sind Cyclobuten, Cyclopenten, Cyclohexen, Cyclooocten, Cyclohepten. Norbonen oder 7-Oxanorbonen; Beispiele geeigneter acyclischer Monoolefine sind in Kohlenwasserstoffgemischen enthalten, die in der Erdölverarbeitung durch Cracken erhalten werden ($C_5$-Schnitt); Beispiele geeigneter, erfindungsgemäß zu verwendender oligomerer Polyole weisen eine Hydroxylzahl (OHZ) von 200 bis 450, ein zahlenmittleres Molekulargewicht Mn von 400 bis 1000 und ein massenmittleres Molekulargewicht $M_w$ von 600 bis 1100 auf;

Beispiele geeigneter erfindungsgemäß zu verwendender niedermolekularer Verbindungen c) sind verzweigte, cyclische und/oder acyclische $C_9$-$C_{16}$-Alkane, die mit mindestens zwei Hydroxylgruppen funktionalisiert sind, insbesondere Diethyloctandiole, sowie Cyclohexandimethanol, Hydroxypivalinsäureneopentylo,lykolester. Neopentylglykol, Trimethylolpropan oder Pentaerythrit.

Von den vorstehend beschriebenen erfindungsgemäß zu verwendenden Polyolen c) sind die carboxylgruppenfreien Polyacrylate und Polymethacrylate, welche vorstehend unter der Ziffer 1.1 beschrieben werden, von ganz besonderem Vorteil und werden deshalb ganz besonders bevorzugt verwendet.

Die erfindungsgemäßen Pulverklarlacke und Slurries können einen oder mehrere geeignete Katalysatoren für die Aushärtung der Epoxidharze enthalten. Beispiele geeigneter Katalysatoren sind Phosphonium- und Tetraalkylammoniumsalze organischer und anorganischer Säuren, Amine, Imidazol und Imidazolderivate. Die Katalysatoren werden im allgemeinen in Mengen von 0,001 bis 2 Gew.-%, bezogen auf das Gesamtgewicht der Epoxidgruppen enthaltenden Komponente a) oder b) sowie der Carboxylgruppen enthaltenden Komponente b) oder a), verwendet.

Beispiele geeigneter Phosphoniumsalze sind Ethyltriphenylphosphoniuntiodid, Ethyltriphenylphosphoniumchlorid, Ethylttiphenylphosphoniumthiocyanat, Ethyltriphenylphosphonium-Acetat-Essigsäurekomplex, Tetrabutylphosphoniumiodid, Tetrabutylphosphoniumbromid oder Tetrabutylphosphonium-Acetat-Essigsäurekomplex. Diese und andere geeignete Phosphonium-Katalysatoren werden beispielsweise in den Patentschriften US-A-3,477,990 oder der US-A-3,341,580 beschrieben.

Beispiele geeigneter Tetraalkylammoniumsalze sind Cetyltrimethylammoniumund Dicetyldimethylammoniumbromid.

Beispiele geeigneter Imidazol-Katalysatoren sind 2-Styrylimidazol, 1-Benzyl-2-methylimidazol, 2-Methylimidazol oder 2-Butylimidazol. Diese und weitere geeignete Imidazol-Katalysatoren werden in dem belgischen Patent Nr. 756,693 beschrieben.

Außerdem können die erfindungsgemäßen Pulverlacke und Slurries noch Hilfsmittel und Additive enthalten. Beispiele geeigneter Hilfsmittel und Additive sind Verlaufsmittel, Antioxidantien, UV-Absorber, Radikalfänger, Rieselhilfen und Entgasungsmittel wie Benzoin.

Die Herstellung der erfindungsgemäßen Pulverklarlacke weist keine verfahrenstechnischen Besonderheiten auf, sondern erfolgt nach den bekannten Methoden, wie sie beispielsweise in der Produkt-information der Firma BASF Lacke + Farben AG "Pulverlacke", 1990, beschrieben werden, durch Homogenisieren und Dispergieren beispielsweise mittels eines Extruders oder Schneckenkneters. Nach ihrer Herstellung werden die erfindungsgemäßen Pulverlacke durch Vermahlen sowie gegebenenfalls durch Sichten und Sieben für die Dispergierung vorbereitet.

Der erfindungsgemäße Pulverklarlack kann indes auch als wäßrige Dispersion vorliegen, welche als Komponente I den vorstehend im Detail beschriebenen erfindungsgemäßen Pulverklarlack sowie eine wäßrige Komponente II enthält. Hierbei handelt es sich dann um die erfindungsgemäße Slurry.

Die erfindungsgemäße Slurry enthält, bezogen auf ihre Gesamtmenge, die Komponente I in einer Menge von 5 bis 80, vorzugsweise 10 bis 70, besonders bevorzugt 15 bis 60 und insbesondere 20 bis 50 Gew.-%.

Die erfindungsgemäß zu verwendende wäßrige Komponente II besteht im wesentlichen aus Wasser. Sie kann indes selbst eine Dispersion darstellen. welche

IIa) wenigstens einen nicht-ionischen Verdicker und gegebenenfalls

IIb) Katalysatoren, Hilfsstoffe, Entschäumungsmittel, Dispersionshilfsmittel, vorzugsweise carboxyfunktionelle Dispersionshilfsmittel, Netzmittel, Antioxidantien, UV-Absorber, Radikalfänger, geringe Mengen an Lösemitteln, Verlaufsmittel, Biozide und/oder Wasserrückhaltemittel

enthält.

Erfindungsgemäß enthält die Komponente II, bezogen auf ihre Gesamtmenge,

0,01 bis 20, vorzugsweise 1 bis 15, besonders bevorzugt 2 bis 10 und insbesondere 5 bis 9 Gew.-% der Komponente IIa) sowie

0,001 bis 20, vorzugsweise 0,01 bis 15, besonders bevorzugt 0,1 bis 10 und insbesondere 1 bis 9 Gew.-% der Komponente IIb).

Die geeigneten nicht-ionischen Assoziativ-Verdicker weisen die folgenden Strukturmerkmale auf:

Iaa) ein hydrophiles Gerüst, das eine ausreichende Wasserlöslichkeit sicherstellt und
Iab) hydrophobe Gruppen, die zu einer assoziativen Wechselwirkung im wäßrigen Medium befähigt sind.

Beispiele geeigneter hydrophober Gruppen sind langkettige Alkylreste wie Dodecyl-, Hexadecyl- oder Octadecyl-Reste oder Alkylarylreste wie Octylphenyloder Nonylphenyl-Reste.

Beispiele geeigneter hydrophiler Gerüste sind Polyacrylate, Celluloseether oder, insbesondere, Polyurethane, welche die hydrophilen Gruppen als Polymerbausteine enthalten. Hierbei sind als hydrophile Gerüste Polyurethane besonders bevorzugt, welche Polyetherketten, vorzugsweise aus Polyethylenoxid. als Bausteine enthalten.

Bei der Synthese solcher Polyetherpolyurethane dienen die Di- und/oder Polyisocyanate, vorzugsweise aliphatische Diisocyanate, insbesondere gegebenenfalls alkylsubstituiertes 1,6-Hexamethylendiisocyanat, zur Verknüpfung der Hydroxylgruppen-terminierten Polyetherbausteinen untereinander und zur Verknüpfung der Polyetherbausteine mit den hydrophoben Endgruppenbausteinen, welche beispielsweise monofunktionelle Alkohole und/oder Amine mit den oben genannten langkettigen Alkylresten und/oder Alkylarylresten sein können.

Aus den Komponenten I und II kann durch Naßverrmahlung oder durch Einrühren von trocken vermahlenem erfindungsgemäßem Pulverklarlack die erfindungsgemäße Slurry hergestellt werden. Besonders bevorzugt wird die Naßvermahlung.

Die vorliegende Erfindung betrifft deshalb auch ein Verfahren zur Herstellung der erfindungsgemäßen Slurry auf der Basis der Komponente I, welche erfindungsgemäß in der Komponente II dispergiert wird. Im folgenden wird dieses Verfahren als "erfindungsgemäßes Verfahren" bezeichnet.

Bei dem erfindungsgemäßen Verfahren wird in der bevorzugten Verfahrensweise nach der Dispergierung der Komponente I in der Komponente II vermahlen, wonach der pH-Wert auf 4,0 bis 7,0 eingestellt und die resultierende Slurry nitriert wird.

Erfindungsgemäß liegt die mittlere Komgröße der Komponente I in der erfindungsgemäßen Slurry zwischen 1 und 25 mikrometer, vorzugsweise unter 20 mikrometer, und insbesondere bei 3 bis 10 mikrometer. Vorzugsweise liegt der Festkörpergehalt der erfindungsgemäßen Slurry, bezogen auf ihre Gesamtmenge, zwischen 15 und 50 Gew.-%.

In erfindungsgemäßer Verfahrensweise können vor oder nach der Naßvermahlung oder dem Eintragen des erfindungsgemäßen Pulverklarlacks (Komponente I) in das Wasser oder das wäßrige Medium (Komponente II) bis zu 5 Gew.-%, bezogen auf die Gesamtmenge der Komponenten I und II, eines Entschäumergemisches, eines Ammonium- und/oder Alkalisalzes, eines carboxyfunktionellen oder nicht-ionischen Dispergierhilfsmittels, Netzmittels und/oder Verdickergemisches sowie der anderen Additive zugesetzt werden. Vorzugsweise werden diese Additive zunächst in Wasser dispergiert, wonach in kleinen Portionen der erfindungsgemäße Pulverklarlack eingerührt wird. Anschließend werden noch einmal die Additive und hiernach der erfindungsgemäße Pulverklarlack in kleinen Portionen eingerührt.

Der pH-Wert wird vorzugsweise mit Ammoniak und/oder Aminen eingestellt. Hierbei kann der pH-Wert zunächst ansteigen, so daß eine stark basische Dispersion resultiert. Der pH-Wert fällt jedoch innerhalb mehrerer Stunden oder Tage wieder auf die gewünschten Werte.

Die resultierende erfindungsgemäße Slurry läßt sich als Überzug von Basislacken, vorzugsweise in der Automobilindustrie, verwenden. Besonders gut geeignet ist die erfindungsgemäße Slurry für die Herstellung von Klarlacken auf Wasserbasislacken auf der Basis von Polyestern und/oder Polyurethanharzen einerseits und Aminoplastharzen andererseits.

Die erfindungsgemäße Slurry läßt sich mit den aus der Flüssiglacktechnologie bekannten Methoden applizieren. Insbesondere kann sie mittels Spritzverfahren aufgetragen werden. Hierbei kommen die elektrostatisch unterstützte Applikation mit Hochrotationsglocken oder die pneumatische Applikation in Betracht.

Die auf die Basislackschichten applizierten erfindungsgemäßen Slurries werden regelmäßig vor dem Einbrennen abgelüftet. Dies geschieht zweckmäßigerweise zunächst bei Raumtemperatur und anschließend bei leicht erhöhter Temperatur. Im allgemeinen liegt die erhöhte Temperatur bei 40 bis 70 °C, vorzugsweise 50 bis 65 °C. Das Ablüften wird für 2 bis 10 Minuten, vorzugsweise 4 bis 8 Minuten bei Raumtemperatur durchgeführt. Bei erhöhter Temperatur wird nochmals während derselben Zeitspanne abgelüftet.

Das Einbrennen kann bereits bei Temperaturen von 130 °C durchgeführt werden. Es kommen aber auch Einbrenntemperaturen von 130 bis 180 °C, insbesondere 135 bis 155 °C in Betracht.

Mit dem erfindungsgemäßen Verfahren können Schichtdicken von 30 bis 50, insbesondere 35 bis 45 mikrometer, erreicht werden. Klarlacke mit vergleichbarer Qualität konnten bisher nach dem Stand der Technik nur unter Verwendung von Pulverklarlacken und nur in Schichtdicken von 65 bis 80 mikrometer hergestellt werden. Der besondere Vorteil der Klarlacke, welche in erfindungsgemäßer Verfahrensweise aus den erfindungsgemäßen Slurries hergestellt worden sind, liegt darin, daß ihre Anätzbeständigkeit gegenüber Wasser, Baumharz und Schwefelsäure verbessert, ihre Vergilbungsneigung signifikant reduziert und ihre Haftung auf den Basislackschichten erheblich verbessert ist.

**Beispiel 1 und Vergleichsversuch V1**

**1. Die Herstellung der Ausgangsverbindungen**

**1.1 Die Herstellung eines glycidylgruppenhaltigen Acrylatharzes als Bindemittel a)**

21,1 Teile Xylol wurden in einem geeigneten Reaktionsgefäß vorgelegt und auf 130 °C erwärmt. Zu dieser Vorlage wurden bei 130 °C innerhalb vier Stunden über zwei getrennte Zulaufbehälter der Initiator, bestehend aus 4,5 Teilen TBPEH (tert.-Butylperethylhexanoat) und 4,86 Teilen Xylol, und die Monomerenmischung, bestehend aus 10,78 Teilen Methylmethacrylat, 25,5 Teilen n-Butylmethacrylat, 17,39 Teilen Styrol und 23,95 Teilen Glycidylmethacrylat zudosiert. Anschließend wurde die resultierende Mischung auf 180 °C erwärmt, und im Vakuum wurde bei unter 100 mbar das Lösemittel abgezogen. Es resultierte das Acrylatharz 1.1.

**1.2 Die Herstellung eines hydroxylgruppenhaltigen Acrylatharzes als Polyol c)**

23,83 Teile Xylol wurden in einem geeigneten Reaktionsgefäß vorgelegt und auf 130 °C erwärmt. Zu dieser Vorlage wurden bei 130 °C binnen vier Stunden über zwei getrennte Zulaufbehälter der Initiator, bestehend aus 4,03 TBPEH (tert.-Butylperethylhexanoat) und 4,03 Teilen Xylol, und die Monomerenmischung, bestehend aus 17,45 Teilen Methylmethacrylat, 14,09 Teilen n-Butylmethacrylat, 16,78 Teilen Styrol und 18,79 Teilen Hydroxypropylmethacrylat zudosiert. Hiernach wurden die beiden Zulaufbehälter mit 0,5 Teilen Xylol nachgespült. Anschließend wurde die resultierende Reaktionsmischung auf 180 °C erwärmt, und im Vakuum wurde bei 100 mbar das Lösemittel abgezogen. Es resultierte das Acrylatharz 1.2.

**2. Die Herstellung von Pulverklarlacken**

**2.1 Die Herstellung eines nicht erfindungsgemäßen Pulverklarlacks für den Vergleichsversuch V1**

73,5 Teile Acrylatharz 1.1, 17,8 Teile Dodecandicarbonsäure, 5,0 Teile lösemittelfreies Tris(alkoxycarbonylamino)triazin, 2 Teile Tinuvin 1130 (UV-Absorber der Firma Ciba-Geigy), 0,9 Teile Tinuvin 144 (Lichtstabilisator auf der Basis eines gehinderten Amins (HALS) der Firma Ciba-Geigy), 0,4 Teile Additol XL (Verlaufsmittel der Firma Hoechst AG) und 0,4 Teile Benzoin (Entgasungsmittel) wurden innig in einem Henschel-Fluidmischer vermischt, auf einem BUSS PLK 46 Extruder extrudiert und auf einer Hosokawa ACM 2-Mühle vermahlen. Der Pulverklarlack wurde über einem 125 mikrometer Sieb abgesiebt. Es resultierte der nicht erfindungsgemäße Pulverklarlack 2.1.
Das lösemittelfreie Tris(alkoxycarbonylamino)triazin selbst wurde erhalten, indem man aus der käuflichen Harzlösung (51%-ig in n- Butanol von Firma Cytec) unter Vakuum bei 50 bis 130 °C das Lösemittel abdestillierte und die resultierende Harzschmelze auf ein Pelletierkühlband oder in eine Kühlwanne austrägt.

**2.2 Die Herstellung eines erfindungsgemäßen Pulverklarlacks für das Beispiel 1**

62,8 Teile des Acrylatharzes 1.1, 13,5 Teile Dodecandicarbonsäure, 5,0 Teile lösemittelfreies Tris(alkoxycarbonylamino)triazin, 14,8 Teile Acrylatharz 1.2, 2,0 Teile Tinuvin 1130, 0,9 Teile Tinuvin 144, 0,4 Teile Additol XL 490 wurden wie vorstehend in Ziff. 2.1 beschrieben vermischt, extrudiert, vermahlen und gesiebt. Es resultierte der erfindungsgemäße Pulverklarlack 2. 2

**3. Die Herstellung von Pulverklarlack-Slurries**

In 400 Teile entsalztes Wasser wurden 0,6 Teile Troykyd D777 (Entschäumer der Firma Troy Chemical Company), 0,6 Teile Orotan 731 K (Dispergierhilfsmittel der Firma Rohm & Haas), 0,06 Teile Surfynol TMN 6 (Netzmittel der Firma Air Products) und 16,5 Teile RM8 (nicht-ionischer Assoziativ-Verdicker auf der Basis von Polyurethanen der Firma Rohm & Haas) dispergiert. Anschließend wurden im kleinen Portionen 94 Teile des Pulverklarlacks 2.1 oder 2.2 eingerührt. Anschließend wurden noch einmal 0,6 Teile Troykyd D777, 0,6 Teile Orotan 731 K, 0,06 Teile Surfynol TMN 6 und 16.5 Teile RM8 eindispergiert. Anschließend wurden in kleinen Portionen weitere 94 Teile des Pulverklarlacks 2.1 oder 2.2 eingerührt.
Die resultierenden Mischungen wurden während 3,5 Stunden in einer Sandmühle gemahlen. Die anschließend gemessene durchschnittliche Teilchengröße lag bei 4 mikrometer. Die Pulverklarlack-Slurries wurden durch einen 50 mikrometer Filter filtriert und mit 0,05 Gew.-%, bezogen auf ihrer Gesamtmenge, Byk 345 (Verlaufsmittel der Firma Byk) versetzt.
Bei Verwendung des nicht erfindungsgemäßen Pulverklarlacks 2.1 resultierte die nicht erfindungsgemäße Pulverklarlack-Slurry 3.1.
Bei Verwendung des erfindungsgemäßen Pulverklarlacks 2. 2 resultierte die erfindungsgemäße Pulverklarlack-Slurry 3.2.

**4. Die Applikation der erfindungsgemäßen Pulverklarlack-Slurry 3.2 (Beispiel 1) und der nicht erfindungsgemäßen Pulverklarlack-Slurry 3.1 (Vergleichsversuch V1)**

Zur Applikation der Pulverklarlack-Slurries 3.1 und 3.2 wurde ein sogenannter "integrierter Aufbau" vorbereitet, welcher nachfolgend für den Metallicfarbton Dschungelgrün beschrieben wird.

Auf mit einem handelsüblichen Elektrotauchlack kathodisch beschichteten Stahltafeln wurden mit einer Becherpistole zunächst eine Funktionsschicht aus dem Lack Ecoprime[R] von BASF Coatings AG appliziert. Nach fünfminütigem Ablüften bei Raumtemperatur wurde auf diese Schicht in gleicher Weise ein grüner Metallic-Wasserbasislack (Ecostar[R] Dschungelgrün der Firma BASF Coatings AG) appliziert und anschließend während fünf Minuten bei 80 °C vorgetrocknet. Nach dem Kühlen der Tafeln wurden die Pulverklarlack-Slurries 3.1 und 3.2 in gleicher Weise aufgetragen. Nach zehnminütigem und Vortrocknen bei 40 oC werden die beschichteten Tafeln bei 145 °C eingebrannt. Es resultieren zwei Metallic-Gesamtlackierungen in dem Farbton Dschungelgrün.

Bei der Verwendung der erfindungsgemäßen Pulverklarlack-Slurry 3.2 wurde die Stärke der Naßschichten so gewählt, daß nach dem Einbrennen die Trockenschichtdicken der Funktionsschicht und des Metallic-Wasserbasislacks jeweils bei 15 mikrometer lagen; die Schichtdicke des erfindungsgemäßen Klarlacks lag bei 44 mikrometer (Prüftafeln 4.2; Beispiel 1).

Bei der Verwendung der nicht erfindungsgemäßen Pulverklarlack-Slurry 3.1 lagen die Trockenschichtdicken der Funktionsschicht und des Metallic-Wasserbasislacks ebenfalls jeweils bei 15 mikrometer; die Schichtdicke des nicht erfindungsgemäßen Klarlacks lag bei 46 mikrometer (Prüftafeln 4.1; Vergleichsversuch V1).

**5. Die Prüfung der Chemikalienbeständigkeit der Prüftafeln 4.2 (Beispiel 1) und der Prüftafeln 4.1 (Vergleichsversuch V1)**

Auf den Prüftafeln 4.2 und 4.1 wurden Baumharz (0,025 ml) und 1 %ige Schwefelsäure (0, 025 ml) aufgetragen. Anschließend wurden die Prüftafeln auf einem Gradientenofen der Firma Byk während 30 Minuten thermisch belastet. Es wurde die Temperatur ermittelt, bei der eine erste Schädigung auftrat.

Bei dem Test mit Baumharz war dies bei den erfindungsgemäßen Prüftafeln 4.2 bei 59 °C (Beispiel 1) und bei den nicht erfindungsgemäßen Prüftafeln 4.1 bei 53 °C (Vergleichsbeispiel V1) der Fall.

Bei dem Test mit Schwefelsäure war dies bei den erfindungsgemäßen Prüftafeln 4.2 bei 52 °C (Beispiel 1) und bei den nicht erfindungsgemäßen Prüftafeln 4.1 bei 51 °C (Vergleichsversuch V1) der Fall.

**6. Die Prüfung der mechanisch-technologischen Eigenschaften der erfindungsgemäßen Prüftafeln 4.2 (Beispiel 1) und der nicht erfindungsgemäßen Prüftafeln 4.1 (Vergleichsversuch V1)**

Die Tabelle gibt einen Überblick über die mechanisch-technologischen Tests und die hierbei erhaltenen Ergebnisse.

Tabelle:

| Mechanisch-technologische Eigenschaften der erfindungsgemäßen (4.2) und der nicht erfindungsgemäßen (4.1) Prüftafeln | | |
|---|---|---|
| Testmethoden | Beispiel 1 | Vergleichsversuch V1 |
| | | |
| Mercedes-Benz (MB) Kugelstoß, Abschlag bei - 20 °C [nun2] | 7 | 6 |
| MB Kugelstoß, Rostgrad bei -20 °C [Note 0 bis 5] | 1 | 1 |
| Kratzprobe nach DBL 7399 [Note 0 bis 5] | 1,5 | 1,5 |
| Kratzprobe nach 240 Stunden Schwitzwasser-Konstantklima (SKK) [Note 0 bis 5] | 1,0 | 2, 0 |
| Gitterschnitt nach DIN 53151 (2 mm) [Note 0 bis 5] | 0 | 0 |
| Gitterschnitt nach 240 Stunden SKK und 24 Stunden Regeneration | 0 | 1 |

Tabelle: (fortgesetzt)

| Mechanisch-technologische Eigenschaften der erfindungsgemäßen (4.2) und der nicht erfindungsgemäßen (4.1) Prüftafeln | | |
|---|---|---|
| Testmethoden | Beispiel 1 | Vergleichsversuch V1 |
| Hochdruckreinigungsbeständigkeit. Enthafntng am Ritz[a]) (%) | 0 | 20 |

[Note 0 bis 5]: 0 = bester Wert; 5 = schlechtester Wert a) Die Prüftafeln wurden in der Mitte auf einer Länge von 10 cm mit dem für Korrosionstests gebräuchlichen Ritzstichel geritzt. Die Prüftafeln wurden dann horizontal auf dem Boden liegend mit einem marktüblichen Hochdruckreiniger mit rotierender Frontdüse und einem Druck von 230 bar mit nicht erwärmtem Leitungswasser gespritzt, wobei der Ritz in seiner Längsrichtung im Abstand von 10 cm mit der Reinigungslanze fünfmal überfahren wurde. Bei der nicht erfindungsgemäßen Prüftafel 4.1 kam es in einem Streifen mit je 1 cm Abstand zum Ritz zu kleinflächigen Enthaftungen des Klarlacks, welche ca. 20% der genannten Fläche entsprachen. Im Falle der erfindungsgemäßen Prüftafel 4.2 blieb die gesamte Tafel unbeschädigt und es kam zu keinerlei Enthaftung am Ritz.

Der Vergleich der erhaltenen Ergebnisse zeigt, daß der erfindungsgemäße Klarlack eine deutlich verbesserte Haftung auf dem Wasserbasislack aufwies als der herkömmliche.

**Patentansprüche**

1. Pulverklarlacke und Pulverklarlack-Slurries, welche

    a) mindestens ein epoxidhaltiges Bindemittel mit einem Gehalt von, bezogen auf das Bindemittel, 0,5 bis 40 Gew.-% an einpolymerisierten glycidylgruppenhaltigen Monomeren, und

    b) mindestens ein Tris(alkoxycarbonylamino)triazin und mindestens eine Polycarbonsäure, insbesondere eine geradkettige Dicarbonsäure, und/oder einen carboxyfunktionellen Polyester als Vernetzungsmittel

    oder alternativ

    a) mindestens ein Tris(alkoxycarbonylamino)triazin und mindestens ein oligomeres oder polymeres epoxidhaltiges Vemetzungsmittel mit einem Gehalt von, bezogen auf das Vemetzungsmittel, 0,5 bis 40 Gew.-% an einpolymerisierten glycidylgruppenhaltigen Monomeren und/oder ein niedermolekulares epoxidhaltiges Vemetzungsmittel und

    b) mindestens ein Carboxylgruppen enthaltendes Polymer als Bindemittel

    enthalten,
    wobei beide Varianten a) mindestens ein Polyol enthalten und wobei das epoxidhaltige Bindemittel a) oder das oligomere oder polymere epoxidhaltige Vemetzungsmittel a) vinylaromatische Verbindungen einpolymerisiert enthält, deren Gehalt indes nicht über 35 Gew.-%, bezogen auf das Bindemittel a) oder das Vemetzungsmittel a), liegt.

2. Pulverklarlacke und Pulverklarlack-Slurries nach Anspruch 1, **dadurch gekennzeichnet, daß** sie

    a) mindestens ein epoxidhaltiges Bindemittel mit einem Gehalt von, bezogen auf das Bindemittel, 0,5 bis 40 Gew.-% an einpolymerisierten glycidylgruppenhaltigen Monomeren und

    b) mindestens ein Tris(alkoxycarbonylamino)triazin und mindestens eine Polycarbonsäure, insbesondere eine geradkettige Dicarbonsäure, und/oder einen carboxyfunktionellen Polyester als Vernetzungsmittel

    enthalten.

3. Die Pulverklarlacke und Pulverklarlack-Slurries nach Anspruch 1 oder 2, **dadurch gekennzeichnet, daß** sie, bezogen auf ihren Festkörper, die wesentlichen Bestandteile a), b) und c) in den folgenden Mengen enthalten:

    a) 55 bis 80, besonders bevorzugt 60 bis 78 und insbesondere 62 bis 75 Gew.-%,

b) 14 bis 30, besonders bevorzugt 17 bis 25 und insbesondere 18 bis 23 Gew.-% sowie

c) 2 bis 22, besonders bevorzugt 4 bis 20 und insbesondere 6 bis 18 Gew.-%.

**4.** Die Pulverklarlacke und Pulverklarlack-Slurries nach einem der Ansprüche 1 bis 3, **dadurch gekennzeichnet, daß** als Polyole c) niedermolekulare Verbindungen, Oligomere und Polymere c) verwendet werden, welche mindestens zwei, vorzugsweise mindestens drei primäre und/oder sekundäre, insbesondere aber primäre, Hydroxylgruppen aufweisen und den festen Zustand der Pulverklarlacke und der Pulverklarlack-Slurries nicht zerstören.

**5.** Die Pulverklarlacke und Pulverklarlack-Slurries nach Anspruch 4, **dadurch gekennzeichnet, daß** als niedermolekulare Verbindungen c) verzweigte, cyclische und/oder acyclische $C_9$-$C_{16}$-Alkane, die mit mindestens zwei Hydroxylgruppen funktionalisiert sind, insbesondere Diethyloctandiole, sowie Cyclohexandimethanol, Hydroxypivalinsäureneopentylglykolester, Neopentylglykol, Trimethylolpropan oder Pentaerythrit verwendet werden.

**6.** Die Pulverklarlacke und Pulverklarlack-Slurries nach Anspruch 4, **dadurch gekennzeichnet, daß** als Oligomere und Polymere c) lineare und/oder verzweigte und/oder blockartig, kammartig und/oder statistisch aufgebaute Poly(meth)acrylate, Polyester, Polyurethane, acrylierte Polyurethane, acrylierte Polyester, Polylactone, Polycarbonate, Polyether, (Meth)Acrylatdiole, Polyharnstoffe oder oligomere Polyole verwendet werden.

**7.** Die Pulverklarlacke und Pulverklarlack-Slurries nach Anspruch 6, **dadurch gekennzeichnet, daß** als Polyole c) Oligomere verwendet werden, welche durch Metathesereaktionen von acyclischen Monoolefinen und cyclischen Monoolefinen zu oligomeren Zwischenprodukten sowie deren anschließender Hydroformylierung und Hydrierung erhältlich sind.

**8.** Die Pulverklarlacke und Pulverklarlack-Slurries nach Anspruch 6, **dadurch gekennzeichnet, daß** als Polymere Polyacrylate, Polyester und/oder acrylierte Polyurethane verwendet werden.

**9.** Die Pulverklarlacke und Pulverklarlack-Slurries nach Anspruch 6 oder 8, **dadurch gekennzeichnet, daß** Polyacrylate verwendet werden, welche herstellbar sind indem (a1) 10 bis 92, vorzugsweise 20 bis 60 Gew.-%, eines Alkyl- oder Cycloalkylmethacrylats mit 1 bis 18, vorzugsweise 4 bis 13 Kohlenstoffatomen im Alkyl- oder Cycloalkylrest oder Mischungen aus solchen Monomeren, (a2) 8 bis 60, vorzugsweise 12,5 bis 50,0 Gew.-%, eines Hydroxyalkylacrylats oder eines Hydroxyalkylmethacrylats mit 2 bis 4 Kohlenstoffatomen im Hydroxyalkylrest oder Mischungen aus solchen Monomeren, (a3) 0 bis 5, vorzugsweise 0,7 bis 3 Gew.-% Acrylsäure oder Methacrylsäure oder Mischungen aus diesen Monomeren und (a4) 0 bis 50, vorzugsweise bis zu 30 Gew.-%, von von (a1), (a2) und (a3) verschiedenen, mit (a1), (a2) und (a3) copolymerisierbaren ethylenisch ungesättigten Monomeren oder Mischungen aus solchen Monomeren copolymerisiert werden.

**10.** Verwendung der Pulverklarlacke und Pulverklarlack-Slurries gemäß einem der Ansprüche 1 bis 9 für die Herstellung von Klarlacken, insbesondere für die Automobilerstlackierung.

**11.** Klarlacke, hergestellt aus den Pulverklarlacken und Pulverklarlack-Slurries gemäß einem der Ansprüche 1 bis 9.

**Claims**

**1.** Powder clearcoat material or powder clearcoat slurry comprising

a) at least one epoxide-containing binder containing from 0.5 to 40% by weight, based on the binder, of copolymerized glycidyl-containing monomers, and

b) at least one tris(alkoxycarbonylamino)triazine and at least one polycarboxylic acid, in particular a straight-chain dicarboxylic acid, and/or a carboxy-functional polyester as crosslinking agent

or alternatively

a) at least one tris(alkoxycarbonylamino)triazine and at least one oligomeric or polymeric, epoxide-containing crosslinking agent containing from 0.5 to 40% by weight, based on the crosslinking agent, of copolymerized glycidyl-containing monomers, and/or a low molecular mass, epoxide-containing crosslinking agent, and

b) at least one carboxyl-containing polymer as binder,

both variants comprising

a) at least one polyol, and the epoxide-containing binder a) or the oligomeric or polymeric epoxide-containing crosslinking agent a) containing styrenic compounds in copolymerized form, but in a content of not more than 35% by weight, based on the binder a) or the crosslinking agent a).

2. Powder clearcoat material or powder clearcoat slurry according to Claim 1, comprising

a) at least one epoxide-containing binder containing from 0.5 to 40% by weight, based on the binder, of copolymerized glycidyl-containing monomers, and

b) at least one tris (alkoxycarbonylamino) triazine and at least one polycarboxylic acid, in particular a straight-chain dicarboxylic acid, and/or a carboxy-functional polyester as crosslinking agent.

3. Powder clearcoat material or powder clearcoat slurry according to Claim 1 or 2, comprising, based on its solids, the key constituents a), b) and c) in the following amounts:

a) from 55 to 80, with particular preference from 60 to 78, and in particular from 62 to 75% by weight,

b) from 14 to 30, with particular preference from 17 to 25, and in particular from 18 to 23% by weight, and

c) from 2 to 22, with particular preference from 4 to 20, and in particular from 6 to 18% by weight.

4. Powder clearcoat material or powder clearcoat slurry according to any of Claims 1 to 3, **characterized in that** polyols c) used comprise low molecular mass compounds, oligomers and polymers c) which contain at least two, preferably at least three primary and/or secondary, but especially primary, hydroxyl groups and which do not destroy the solid state of the powder clearcoat material or powder clearcoat slurry.

5. Powder clearcoat material or powder clearcoat slurry according to Claim 4, **characterized in that** low molecular mass compounds c) used comprise branched, cyclic and/or acyclic $C_9$-$C_{16}$ alkanes functionalized with at least two hydroxyl groups, especially diethyloctanediols, and also cyclohexanedimethanol, neopentyl glycol hydroxypivalate, neopentyl glycol, trimethylolpropane or pentaerythritol.

6. Powder clearcoat material or powder clearcoat slurry according to Claim 4, **characterized in that** oligomers and polymers c) used comprise linear and/or branched and/or block, comb and/or random poly(meth)acrylates, polyesters, polyurethanes, acrylated polyurethanes, acrylated polyesters, polylactones, polycarbonates, polyethers, (meth)acrylatediols, polyureas or oligomeric polyols.

7. Powder clearcoat material or powder clearcoat slurry according to Claim 6, **characterized in that** polyols c) used comprise oligomers obtainable by metathesis reactions from acyclic monoolefins and cyclic monoolefins to give oligomeric intermediates, and their subsequent hydroformylation and hydrogenation.

8. Powder clearcoat material or powder clearcoat slurry according to Claim 6, **characterized in that** polymers used comprise polyacrylates, polyesters and/or acrylated polyurethanes.

9. Powder clearcoat material or powder clearcoat slurry according to Claim 6 or 8, **characterized in that** polyacrylates are used which are preparable by polymerizing (a1) from 10 to 92, preferably from 20 to 60% by weight of an alkyl methacrylate or cycloalkyl methacrylate having 1 to 18, preferably 4 to 13 carbon atoms in the alkyl or cycloalkyl radical, or mixtures of such monomers, (a2) from 8 to 60, preferably from 12.5 to 50.0% by weight of a hydroxyalkyl acrylate or a hydroxyalkyl methacrylate having 2 to 4 carbon atoms in the hydroxyalkyl radical, or mixtures of such monomers, (a3) from 0 to 5, preferably from 0.7 to 3% by weight of acrylic acid or methacrylic acid or mixtures of these monomers, and (a4) from 0 to 50, preferably up to 30% by weight of ethylenically unsaturated monomers different than but copolymerizable with (a1), (a2) and (a3), or mixtures of such monomers.

10. Use of the powder clearcoat material or powder clearcoat slurry according to any of Claims 1 to 9 to produce clearcoats, especially for automotive OEM finishing.

**11.** Clearcoat produced from the powder clearcoat material or powder clearcoat slurry according to any of Claims 1 to 9.

**Revendications**

**1.** Vernis transparents en poudre et suspensions de vernis transparent en poudre qui contiennent:

    a) au moins un liant qui contient des groupes époxy, avec une teneur en monomères polymérisés qui contiennent des groupes glycidyle de 0,5 à 40% en poids par rapport au liant et
    b) au moins une tris(alkoxycarbonylamino)triazine et au moins un acide polycarboxylique, en particulier un acide dicarboxylique à chaîne linéaire et/ou un polyester à fonctionnalités carboxy, comme agent de réticulation,

ou en variante

    a) au moins une tris(alkoxycarbonylamino)triazine et au moins un agent de réticulation qui contient des groupes époxy, oligomère ou polymère, avec une teneur en monomères polymérisés qui contiennent des groupes glycidyle de 0,5 à 40% en poids par rapport à l'agent de réticulation, et/ou un agent de réticulation à bas poids moléculaire qui contient des groupes époxy et
    b) au moins un polymère qui contient des groupes carboxyle, comme liant,

les deux variantes a) contenant au moins un polyol et le liant a) contenant des groupes époxy ou l'agent de réticulation oligomère ou polymère a) contenant des groupes époxy contient des composés aromatiques de vinyle polymérisés dont la teneur ne dépasse pas 35% en poids par rapport au liant a) ou à l'agent de réticulation a).

**2.** Vernis transparents en poudre et suspensions de vernis transparent en poudre selon la revendication 1, **caractérisés en ce qu'**ils contiennent

    a) au moins un liant qui contient des groupes époxy et une teneur en monomères polymérisés qui contiennent des groupes glycidyle de 0,5 à 40% en poids par rapport au liant et
    b) au moins une tris(alkoxyarbonylamino)triazine et au moins un acide polycarboxylique, en particulier un acide dicarboxylique à chaîne linéaire et/ou un polyester à fonctionnalités carboxy, comme agent de réticulation.

**3.** Vernis transparents en poudre et suspensions de vernis transparent en poudre selon les revendications 1 ou 2, **caractérisés en ce que** par rapport à leur corps solide, ils contiennent les composants essentiels a), b) et c) dans les quantités suivantes:

    a) de 55 à 80, de façon particulièrement préférable de 60 à 78 et en particulier de 62 à 75% en poids,
    b) de 14 à 30, de façon particulièrement préférable de 17 à 25 et en particulier de 18 à 23% en poids ainsi que
    c) de 2 à 22, de façon particulièrement préférable de 4 à 20 et en particulier de 6 à 18% en poids.

**4.** Vernis transparents en poudre et suspensions de vernis transparent en poudre selon l'une des revendications 1 à 3, **caractérisés en ce que** comme polyols c), on utilise des composés oligomères ou polymères c) à bas poids moléculaire qui présentent au moins 2, de préférence au moins 3 groupes hydroxyle primaires et/ou secondaires, mais en particulier primaires, et qui ne détruisent pas l'état solide des vernis transparents en poudre et des suspensions de vernis transparent en poudre.

**5.** Vernis transparents en poudre et suspensions de vernis transparent en poudre selon la revendication 4, **caractérisés en ce que** comme composés c) à bas poids moléculaire, on utilise des alcanes en $C_9$ à $C_{16}$ ramifiés, cycliques et/ou acycliques, qui sont fonctionnalisés avec au moins deux groupes hydroxyle, en particulier des diéthyloctanediols ainsi que le cyclohexanediméthanol, le néopentylglycolester d'acide hydroxypivanique, le néopentylglycol, le triméthylolpropane ou le pentaérythritol.

**6.** Vernis transparents en poudre et suspensions de vernis transparent en poudre selon la revendication 4, **caractérisés en ce que** comme oligomères et polymères c), on utilise des polymères linéaires et/ou ramifiés et/ou à structure séquencée, en peigne et/ou statistique de poly(méth)acrylate, de polyester, de polyuréthane, de polyuréthane acrylé, de polyester acrylé, de polylactone, de polycarbonate, de polyéther, de (méth)acrylatediol et de polyurée, ou des polyols oligomères.

7. Vernis transparents en poudre et suspensions de vernis transparent en poudre selon la revendication 6, **caractérisés en ce que** comme polyols c) on utilise des oligomères qui peuvent être obtenus par des réactions de métathèse de monooléfines acycliques et de monooléfines cycliques en produits intermédiaires oligomères, et ensuite par leur hydroformylation et leur hydrogénation ultérieure.

8. Vernis transparents en poudre et suspensions de vernis transparent en poudre selon la revendication 6; **caractérisés en ce que** comme polymères, on utilise des polyacrylates, des polyesters et/ou des polyuréthanes acrylés.

9. Vernis transparents en poudre et suspensions de vernis transparent en poudre selon la revendication 6 ou 8, **caractérisés en ce que** l'on utilise des polyacrylates qui peuvent être préparés en copolymérisant (a1) de 10 à 92 et de préférence de 20 à 60% en poids d'un méthacrylate d'alkyle ou de cycloalkyle qui compte de 1 à 18 et de préférence de 4 à 13 atomes de carbone dans le radical alkyle ou cycloalkyle ou des mélanges de ces monomères, (a2) de 8 à 60, de préférence de 12,5 à 50,0% en poids d'un acrylate d'hydroxyalkyle ou d'un méthacrylate d'hydroxyalkyle qui compte de 2 à 4 atomes de carbone dans le radical hydroxyalkyle ou des mélanges de ces monomères, (a3) de 0 à 5 et de préférence de 0,7 à 3% en poids d'acide acrylique ou d'acide méthacrylique ou de mélanges de ces monomères et (a4) de 0 à 50 et de préférence jusque 30% en poids de monomères éthyléniquement insaturés différents de (a1), (a2) et (a3) et aptes à copolymériser avec (a1), (a2) et (a3) ou avec des mélanges de ces monomères.

10. Utilisation des vernis transparents en poudre et des suspensions de vernis transparent en poudre selon l'une quelconque des revendications 1 à 9 pour la fabrication de vernis transparents, en particulier pour la première peinture d'automobiles.

11. Vernis transparents préparés à partir des vernis transparents en poudre et des suspensions de vernis transparent en poudre selon l'une quelconque des revendications 1 à 9.